(19) Europäisches Patentamt / European Patent Office / Office européen des brevets

(11) **EP 4 477 864 A2**

(12) **EUROPEAN PATENT APPLICATION**

(43) Date of publication:
**18.12.2024 Bulletin 2024/51**

(21) Application number: **24178054.3**

(22) Date of filing: **24.05.2024**

(51) International Patent Classification (IPC):
**F02C 9/00** $^{(2006.01)}$

(52) Cooperative Patent Classification (CPC):
**F02C 9/48; B64D 27/33; F02C 9/56; F02K 5/00; G06N 3/00;** F05D 2260/81; F05D 2260/821; F05D 2270/07; F05D 2270/709

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.05.2023 US 202318202688**

(71) Applicant: **RTX Corporation**
**Farmington, CT 06032 (US)**

(72) Inventors:
• **KUMAR, Pratyush**
**Farmington, 06032 (US)**
• **AL-NADAWI, Yasir**
**Farmington, 06032 (US)**
• **ILAK, Milos**
**Farmington, 06032 (US)**

(74) Representative: **Dehns**
**10 Old Bailey**
**London EC4M 7NG (GB)**

(54) **METHOD AND APPARATUS FOR POWER SPLITTING FOR HYBRID ELECTRIC PROPULSION SYSTEM**

(57) A method for a HEP system (10) includes obtaining, for each of a plurality of mission profiles (30), a respective first power splitting profile (34) to be used throughout one or more flights described by the mission profile (30) to achieve a fuel consumption objective for the one or more flights. Each power splitting profile (34) indicates a series of power splits between a gas turbine (11) and an electric motor (12) of the HEP system (10). A neural network (46) is trained to mimic the first power splitting profiles (34) for the plurality of mission profiles (30). During one or more actual flights corresponding to a particular mission profile (30') of an aircraft (24) that includes a particular HEP system (10), the neural network (46) is utilized to obtain a second power splitting profile (34') for the particular HEP system (10) for the one or more actual flights, and an output action for the particular HEP system (10) is performed based on the second power splitting profile (34').

FIG.1

EP 4 477 864 A2

**Description**

**BACKGROUND**

This application relates to hybrid electric propulsion (HEP) systems, and more particularly to a method and apparatus for power splitting for a HEP.

Gas turbine engines are known and typically include a fan delivering air into a bypass duct for propulsion. The fan also delivers air into a compressor where air is compressed and delivered into a combustor. The air is mixed with fuel and ignited. Products of this combustion pass downstream over turbine rotors driving them to rotate. The turbine rotors, in turn, rotate compressor rotors and the fan rotor.

HEP systems utilize a combination of electric power from one or more electric motors and combustion power from one or more gas turbines to provide propulsion for an aircraft, and have been identified as a step towards reducing aircraft fuel consumption and supporting sustainable aviation. The electric motor is powered by a power source, such as one or more lithium-ion batteries. This addition of the renewable power source may lead to higher fuel savings and less carbon footprint of future aircrafts.

Given the current status of battery technology, and the varying duration of flights, it is assumed that many flights of aircraft utilizing HEP systems will not be able to rely on electric power alone, and some combustion power will need to be utilized.

**SUMMARY**

A method for a hybrid electric propulsion (HEP) system according to an aspect of the present invention includes obtaining, for each of a plurality of mission profiles, a respective first power splitting profile to be used throughout one or more flights described by the mission profile to achieve a fuel consumption objective for the one or more flights. Each power splitting profile indicates a series of power splits between a gas turbine and an electric motor of the HEP system. A neural network is trained to mimic the first power splitting profiles for the plurality of mission profiles. During one or more actual flights corresponding to a particular mission profile of an aircraft that includes a particular HEP system, the neural network is utilized to obtain a second power splitting profile for the particular HEP system for the one or more actual flights, and an output action for the particular HEP system is performed based on the second power splitting profile.

Optionally, and in accordance with the above, the fuel consumption objective is to minimize fuel consumption during the one or more flights of each mission profile.

Optionally, and in accordance with any of the above, performing the output action includes controlling the particular HEP system during the one or more actual flights to implement the second power splitting profile from the neural network.

Optionally, and in accordance with any of the above, performing the output action includes providing a notification of the second power splitting profile.

Optionally, and in accordance with any of the above, the obtaining includes utilizing a model predictive control (MPC) to obtain, for each of the plurality of mission profiles, the respective first power splitting profile for the mission profile. The MPC is based on a fuel consumption model for the HEP and a battery state of charge model for one or more batteries of the HEP.

Optionally, and in accordance with any of the above, the MPC is a nonlinear MPC.

Optionally, and in accordance with any of the above, the MPC is a linear MPC.

Optionally, and in accordance with any of the above, each mission profile includes a height profile including a plurality of heights, and a velocity profile including a plurality of velocities to be utilized during the one or more flights of the mission profile. Utilizing the MPC includes providing one or more of the following as input to the MPC: a fuel mass, a mass of an aircraft that includes the HEP system, a state of charge of the one or more batteries, and a height profile and velocity profile corresponding to the mission profile.

Optionally, and in accordance with any of the above, the method also includes validating the neural network by performing the following for each of the one or more mission profiles: utilizing the neural network to obtain an additional power splitting profile for the mission profile, determining a difference between the first power splitting profile for the mission profile and the additional power splitting profile for the mission profile, and providing a fault condition notification based the difference exceeding a predefined difference threshold.

A system for a HEP system according to another aspect of the present invention includes processing circuitry operatively connected to memory, and configured: to obtain, for each of a plurality of mission profiles, a respective first power splitting profile to be used throughout the one or more flights described by the mission profile to achieve a fuel consumption objective for the one or more flights. Each power splitting profile indicates a series of power splits between a gas turbine and an electric motor of a HEP system. The processing circuitry is also configured to train a neural network to mimic the first power splitting profiles for the plurality of mission profiles; and during the one or more actual flights corresponding to a particular mission profile of an aircraft that includes a particular HEP system, utilize the neural network to obtain a second power splitting profile for the particular HEP system for the one or more actual flights; and perform an output action for the particular HEP system based on the second power splitting profile.

Optionally, and in accordance with any of the above, the fuel consumption objective is to minimize fuel consumption during the one or more flights of each mission profile.

Optionally, and in accordance with any of the above, to perform the output action, the processing circuitry is configured to control the particular HEP system during the one or more actual flights to implement the second power splitting profile from the neural network.

Optionally, and in accordance with any of the above, to perform the output action, the processing circuitry is configured to provide a notification of the second power splitting profile.

Optionally, and in accordance with any of the above, the processing circuitry is configured to utilize a MPC to obtain, for each of the plurality of mission profiles, the respective first power splitting profile for the mission profile, wherein the MPC is based on a fuel consumption model for the HEP and a battery state of charge model for one or more batteries of the HEP.

Optionally, and in accordance with any of the above, the MPC is a nonlinear MPC.

Optionally, and in accordance with any of the above, the MPC is a linear MPC.

Optionally, and in accordance with any of the above, each mission profile includes a height profile including a plurality of heights, and a velocity profile including a plurality of velocities to be utilized during the one or more flights of the mission profile. To utilize the MPC, the processing circuitry is configured to provide one or more of the following as input to the MPC: a fuel mass, a mass of an aircraft that includes the HEP system, a state of charge of the one or more batteries, and a plurality of height profiles and velocity profiles corresponding to the mission profile.

Optionally, and in accordance with any of the above, the processing circuitry is configured to validate the neural network, the validation comprising, for each of one or more of the mission profiles, the processing circuitry: utilizing the neural network to obtain an additional power splitting profile for the mission profile, determining a difference between the first power splitting profile for the mission profile and the additional power splitting profile for the mission profile, and provides a fault condition notification based on the difference exceeding a predefined difference threshold.

A method for a HEP system according to another aspect of the present invention includes obtaining a neural network that has been trained to mimic a plurality of power splitting profiles for a HEP system, wherein each power splitting profile indicates a series of power splits between a gas turbine and an electric motor of the HEP system, and wherein each mission profile includes a corresponding power splitting profile to achieve a fuel consumption objective for the one or more flights of the mission profile. The method also includes, during one or more actual flights corresponding to a particular mission profile of an aircraft that includes a particular HEP system, utilizing the neural network to obtain an additional power splitting profile for the particular HEP system for the actual flight, and controlling the particular HEP system during the one or more actual flights to implement the additional power splitting profile.

Optionally, and in accordance with any of the above, the fuel consumption objective is to minimize fuel consumption during the one or more flights of each mission profile.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.


**BRIEF DESCRIPTION OF THE DRAWINGS**


Figure 1 is a schematic view of an example hybrid electric propulsion (HEP) system.

Figure 2 is a schematic view of the forces affecting an aircraft that includes the HEP of Figure 1.

Figure 3 is a schematic view of a mission profile that includes a height profile and a velocity profile.

Figure 4 is a schematic view of a power splitting profile that includes a gas turbine power profile and an electric power profile.

Figure 5 is a schematic view of a first computing device used to train a neural network.

Figure 6 is a schematic view of how the computing device of Figure 5 may use a model predictive control (MPC) to generate power splitting profiles for various mission profiles.

Figure 7 is a schematic view of an example neural network.

Figure 8 is a schematic view of a second computing device that utilizes a neural network to obtain a power splitting profile.

Figure 9 is a schematic view of how the computing device of Figure 8 may use a trained neural network to generate power splitting profiles for a mission profile.

Figure 10 is a flowchart of an example method for a HEP system.

## DETAILED DESCRIPTION

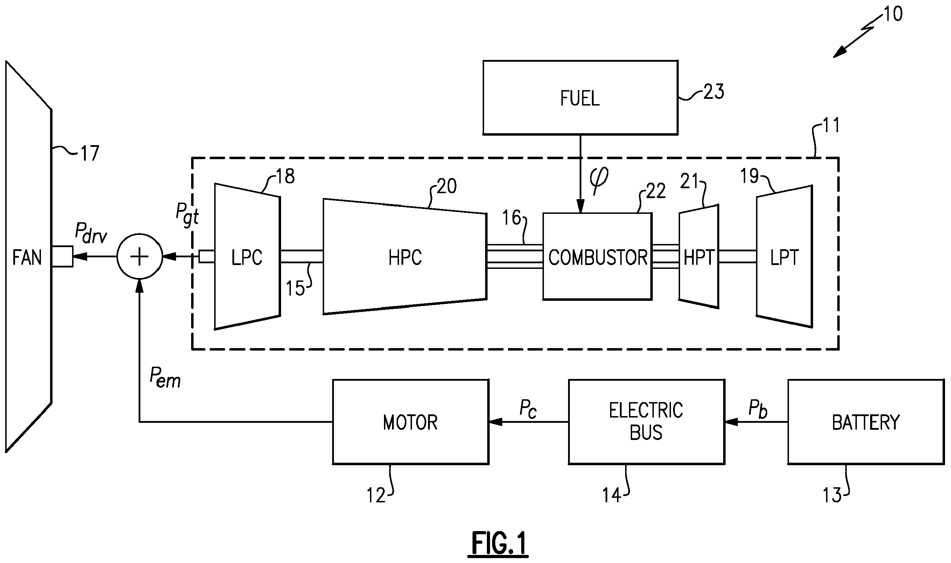

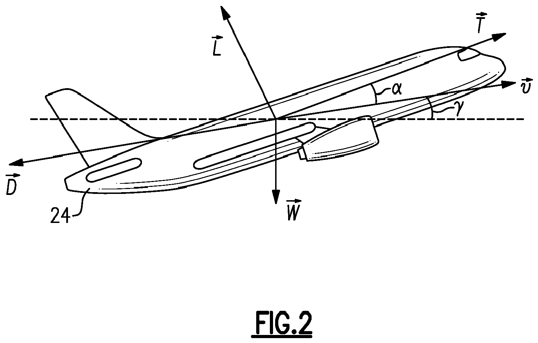

Figure 1 is a schematic view of an example hybrid electric propulsion (HEP) system 10 for an aircraft, such as the example aircraft 24 shown in Figure 2. The HEP system 10 includes a gas turbine 11, which provides gas turbine power $P_{gt}$ that is combustion-based, and one or more electric motors 12 that provides electric power $P_{em}$. The gas turbine 11 and electric motor(s) 12 cooperate according to a power splitting profile to provide a combined power $P_{drv}$. The power split between the gas turbine 11 and electric motor(s) 12 may rely 100% on the combustion-based power $P_{gt}$, 100% on the electric power $P_{em}$, or on some combination of the two.

The HEP system 10 includes one or more batteries 13 (e.g., lithium-ion batteries) that provide battery chemical power $P_b$. An electric bus 14 receives the power $P_b$ and outputs electric power $P_c$ to the electric motor(s) 12. As discussed above, the electric motor(s) 12 provide electric power $P_{em}$ in the HEP system 10.

The gas turbine 11 includes a low speed spool 15 and a high speed spool 16 mounted for rotation about an engine central longitudinal axis. The low speed spool 15 generally interconnects a fan 17, a first (or low) pressure compressor 18, and a first (or low) pressure turbine 19. The high speed spool 16 interconnects a second (or high) pressure compressor 20 and a second (or high) pressure turbine 21. A combustor 22 is arranged between the high pressure compressor 20 and the high pressure turbine 21. A core airflow is compressed by the low pressure compressor 18 then the high pressure compressor 20, is mixed and burned with fuel 23 in the combustor 22, and is then expanded over the high pressure turbine 21 and low pressure turbine 19. In Figure 1, $\varphi$ represents a fuel consumption rate.

The electric motor(s) 12 may be configured to provide propulsion by driving rotation of the spools 15 and/or 16. In one nonlimiting example, a first electric motor 12 drives rotation of the low speed spool 15, and a second electric motor 12 drives rotation of the high speed spool 16.

It is understood that the parallel hybrid electric architecture depicted in Figure 1 is a non-limiting example, and that other architectures could be used, such as a series-hybrid propulsion architecture. Also, although only one HEP system 10 is shown in Figure 1, it is understood that multiple HEP systems 10 may be included on a given aircraft (e.g., two or four, depending on how many sources of propulsion are desired on the aircraft).

Figure 2 is a schematic view of the forces affecting an aircraft 24. These forces include thrust (*T*), lift (*L*), drag (*D*), and gravitational force (*W*). A velocity of the aircraft 24 is represented by v, an angle of attack of the aircraft 24 is represented by $\alpha$, and a flight path angle of the aircraft 24 is represented by $\gamma$.

In the various equations used below, bold symbols, e.g., *d* denote time sequences *d* = [d(0), d(1), ..., d(t)]. Subscripts on time sequences denote restrictions, e.g., $\boldsymbol{d_{i:j}}$ denote elements from time index *i* to *j*. A superscript on a variable, e.g., $d^0$ denotes an optimal solution to an optimization problem. The variable |*x*| is used to denote the Frobenius norm of a vector x.

Below, a simplified two-dimensional model for the aircraft 24 equations of motion is considered, which is developed by considering the four forces shown in Figure 2. The forces acting on the aircraft are the thrust (*T*), lift (*L*), drag (*D*), and gravitational force (*W*) (as illustrated in Figure 2). The summation of these four forces determines the aircraft acceleration using Newton's second law of motion as follows.

$$m_a \frac{d\vec{v}}{dt} = \vec{T} + \vec{L} + \vec{D} + \vec{W} \qquad \text{eq. 1}$$

Here, $m_a$ is the total mass of the aircraft 24 that may change during the flight mission due to fuel consumption. This equation of motion is projected along the directions of the aircraft velocity and the lift force to obtain a two-dimensional model capturing the flight dynamics.

$$m_a \frac{dv}{dt} + m_a g sin(\gamma) = T cos(\alpha) - (1/2) C_D(\alpha) \rho S v^2 \qquad \text{eq. 2}$$

$$m_a v \frac{d\gamma}{dt} + m_a g cos(\gamma) = T sin(\alpha) + (1/2) C_L(\alpha) \rho S v^2 \qquad \text{eq. 3}$$

The terms $C_D$ ($\cdot$) and $C_L$ ($\cdot$) denote the drag and lift coefficients, and are quadratic and linear functions of the angle of attack ($\alpha$) as follows:

$$C_D(\alpha) = a_0 + a_1\alpha + a_2\alpha^2 \qquad\qquad \text{eq. 4}$$

$$C_L(\alpha) = b_0 + b_1\alpha \qquad\qquad \text{eq. 5}$$

Above, the term ρ represents the density of air, and the term S represents the wing area of the aircraft 24.

The total drive power ($P_{drv}$) required to drive the aircraft 24 at the velocity $v$ is obtained using the following equation.

$$P_{drv} = \vec{T}.\vec{v} = m_a v \frac{dv}{dt} + (1/2)C_D(\alpha)\rho S v^3 + m_a g v sin(\gamma) \quad \text{eq. 6}$$

In particular, equations 2-3 and 6 are flight kinematic equations of a motion and propulsion power relationship.

The propulsion power of equation 6 is time varying and changes during a mission based on the aircraft mass, velocity, and the flight path angle ($\gamma$).

Below, the parallel hybrid electric architecture shown in Figure 1 is considered. In addition to the aircraft kinematic equations, the dynamic models for the fuel consumption and battery state of charge are also considered. The fuel mass ($m_f$) depends on the power draw from the gas turbine ($P_{gt}$) as follows.

$$\frac{dm_f}{dt} = -\phi(P_{gt}) = -(\beta_0 + \beta_1 P_{gt}) \qquad\qquad \text{eq. 7}$$

Equation 7 represents propulsion system dynamics of the HEP system 10.

Here, a linear relationship between the gas turbine power $P_{gt}$ and the fuel consumption rate φ is assumed. However, more complex fuel consumption models can be utilized instead.

The dynamics of the battery state of charge ($E_b$) may be represented using the following relationships.

$$\frac{dE_b}{dt} = -P_b \qquad\qquad \text{eq. 8}$$

$$P_b = g(P_c) = \frac{U^2}{2R}\left[1 - \sqrt{1 - \frac{4R}{U^2}P_c}\right] \qquad\qquad \text{eq. 9}$$

$$P_c = h(P_{em}) = \alpha_{em0} + \alpha_{em1}P_{em} \qquad\qquad \text{eq. 10}$$

In Equations 8-10, $P_{em}$ is the final power provided by the electric motor, $P_c$ is the power output of the electric bus 14, and $P_b$ is the battery chemical power that drives the battery state of charge ($E_b$) dynamics (see also Figure 1). However, it is understood that this is only an example, and that more complex dynamic models of a battery state of charge could be utilized.

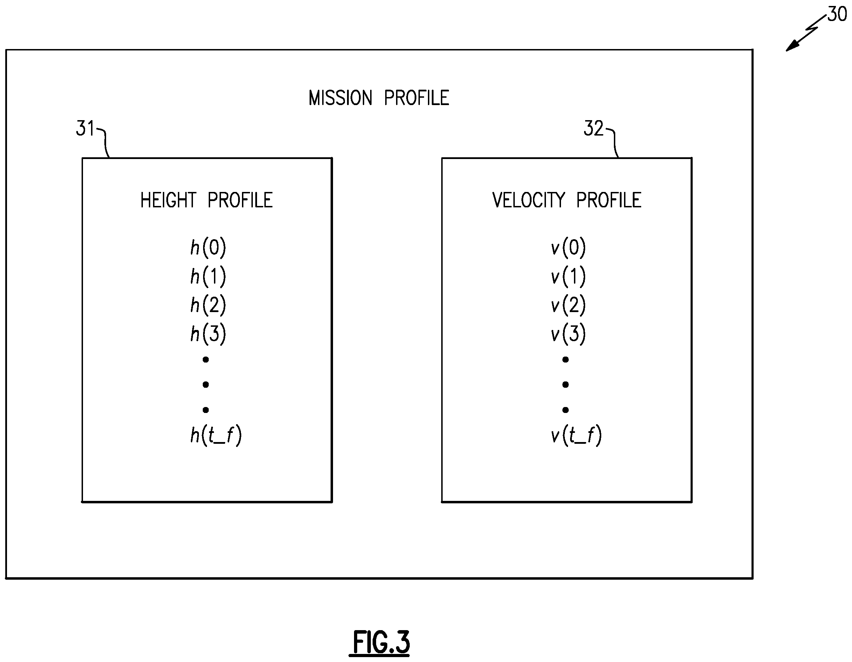

Figure 3 is a schematic view of a mission profile 30 that describes how the aircraft 24 should be operated for one or more flights (e.g., having multiple flight legs) corresponding to a mission. The mission profile 30 includes a height profile 31 indicating a plurality of aircraft heights that the aircraft 24 should be at during the flight, and a velocity profile 32 indicating a plurality of velocities at which the aircraft 24 should be traveling at those various heights. At time 0, height $h(0)$ and velocity $v(0)$ should be used. At time 1, height $h(1)$ and velocity $v(1)$ should be used, and so on. The mission profile 30 may be provided by an upper-level mission planning layer, for example.

By systematically considering the aircraft equations of motion, the fuel consumption, and battery state of charge dynamics, a power splitting profile can be determined that indicates how much power should be drawn from the gas turbine 11 and the electric motor(s) 12 to achieve a fuel consumption objective during a mission of the aircraft 24 (as described by a corresponding mission profile 30), with the understanding that the total power drawn from the two sources should be greater than or equal to the required drive power for the desired mission profile should be satisfied. In one nonlimiting example, the fuel consumption objective is to minimize fuel 23 consumption over the one or more flights of the mission profile 30.

Although the fuel consumption objective of minimizing fuel consumption is discussed herein, it is understood that this is a nonlimiting example, and that other fuel consumption objectives could be used. In one example, the objective may be to minimize battery power usage during a particular leg of a flight if that leg approaches an airport where fuel is inexpensive but electricity (for charging the one or more batteries 13) is expensive. In one example, in which an aircraft includes a newer engine and an older engine, the fuel consumption objective may be to use all electric power for the older engine to maintain a lower engine operating temperature of the older engine. In one example, the fuel consumption objective may be to use no or limited electric power during a first flight leg in order to minimize ground time that would be needed for recharging, and then use all available electric power during a second flight leg after which there will be a greater amount of permissible ground time. Of course, other fuel consumption objectives could be used instead.

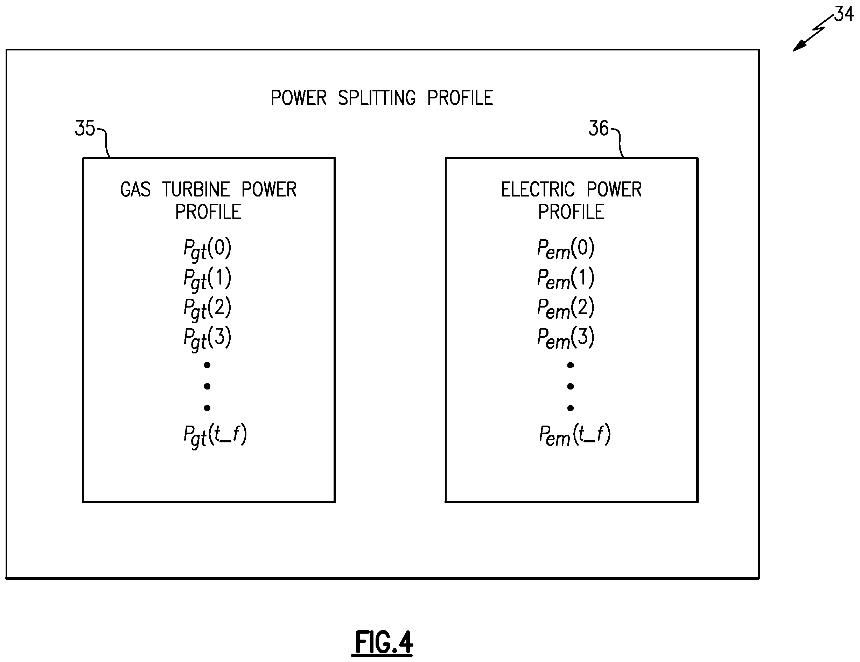

Figure 4 is a schematic view of a power splitting profile 34 that includes a gas turbine power profile 35 and an electric power profile 36 to be used to achieve a particular fuel consumption objective for a corresponding mission profile 30. Together, the profiles 35 and 36 describe a plurality of power splits between the gas turbine 11 and electric motor(s) 12 of the HEP system 10. A first power split at time 0 includes the values of $P_{gt}(0)$ and $P_{em}(0)$. A second power split at time 1 includes the values of $P_{gt}(1)$ and $P_{em}(1)$, and so on.

Below, linear model predictive control (MPC) and nonlinear MPC approaches are discussed to determine a power splitting profile 34.

In the first example below, a linear MPC is formulated as a convex optimization program in which aircraft dynamics are simplified and consider a small angle of attack ($\alpha$) and a negligible component of the thrust along the direction of the lift force. This assumption allows an analytical calculation of the drive power as a function of the fuel mass, which is used to formulate the convex program. An MPC that solves this convex program may be referred to as a "linear MPC controller."

In one example implementation for the linear MPC controller, the following optimization problem is solved at every time step in real time to determine the power draw from the gas turbine and electric motor:

$$\min_{m_f, \phi, E_b, P_b} \sum_{k=t}^{N(t)-1} \phi(k)\, \delta \qquad\qquad \text{eq. 11}$$

$$\text{subject. to.} \qquad m_f(k+1) = m_f(k) - \phi(k)\delta \qquad\qquad \text{eq. 12}$$

$$E_b(k+1) = E_b(k) - P_b(k)\delta \qquad\qquad \text{eq. 13}$$

$$\beta_0 + \beta_1\big(P_{drv}(m_a) - P_{em}(P_b)\big) \leq \phi(k) \qquad\qquad \text{eq. 14}$$

$$\underline{\phi} \leq \phi(k) \leq \overline{\phi} \qquad\qquad \text{eq. 15}$$

$$\underline{P_b} \leq P_b(\mathrm{k}) \leq \overline{P_b} \qquad\qquad \text{eq. 16}$$

$$\underline{E_b} \leq E_b(\mathrm{k}) \leq \overline{E_b} \qquad\qquad \text{eq. 17}$$

The decision variables for the fuel mass, battery state-of-charge, etc. are considered for each propulsion system. In the example below, it is assumed that there are a total of $n_{prop}$ propulsion systems, and the dynamics of the fuel consumption and battery state-of-charge are identical across the propulsion systems. The drive power $P_{drv}(\cdot)$ is obtained analytically as a quadratic function of the aircraft mass, which may be computed as shown below.

$$m_a = m_{anf} + m_f n_{prop} \qquad\qquad \text{eq. 18}$$

In equation 18, $m_{anf}$ is the aircraft mass when the aircraft's fuel tanks are empty. The function $P_{em}(P_b)$ for the optimization problem is obtained using inverse of the functions $g(\cdot)$ and $h(\cdot)$ discussed above in equations 9-10. Constraints on the battery state of charge and gas turbine and electric motor powers are also considered in the MPC optimization problem. The latter two types of constraints are appropriately converted to the fuel consumption and battery chemical power constraints for the optimization problem.

The linear MPC problem is solved after each measurement sampling period (e.g., on the order of minutes, seconds, or milliseconds), by considering the predictions of the height, velocity, and fuel consumptions in the remainder of the flight. The first element of the optimal solutions ($\phi^0(0)$, $P_b^0(0)$ ) of the linear MPC problem is used to determine the power draw from the gas turbine 11 and electric motor 12. The variable $\phi^0(0)$ is converted using the inverse of the function $\phi(P_{gt})$ (discussed in equation 7) to obtain the gas turbine power $P^0_{gt}(0)$. The electric motor power $P^0_{em}(0)$ is obtained using the function $P_{em}(P_b)$ based on the solution $P_b^0(0)$.

The linear MPC formulation discussed above assumes a small angle of attack and that the contribution of the thrust along the direction of the lift force is zero. In practice, this assumption may not always be correct. In addition, due to the nature of battery chemical to electric motor power function $P_{em}(P_b)$, a convex optimization program is obtained for the MPC controller. This function may be difficult to use to obtain a convex program for the MPC.

Due to these reasons, use of a nonlinear MPC controller will in at least some instances provide a more accurate consideration of flight dynamics, and a more optimal solution to the power splitting problem. The nonlinear MPC controller relaxes the assumption that the contribution of the thrust along the direction of the lift force is zero, and solves a nonlinear optimization problem. This MPC may be referred to as a nonlinear MPC (NMPC) controller. For both controllers (linear and nonlinear), one may convert the continuous time flight dynamics into discrete time at a given measurement sample time ($\delta$). The discrete time models are used in the optimization problem formulations of the MPC controllers.

The nonlinear MPC controller may be formulated using the equations below.

$$\min_{m_f,\ P_{gt},\ E_b,\ P_{em},\ T,\ \alpha} \sum_{k=t}^{N(t)-1} \phi\left(P_{gt}(k)\right)\delta \qquad \text{eq. 19}$$

where: $m_f$ represents remaining fuel mass;

$P_{gt}$ represents power of the gas turbine 11;
$E_b$ represents a state of charge of the one or more batteries 13;
$P_{em}$ represents power of the electric motor 12;
$T$ represents thrust provided by the combination of all propulsion systems of an aircraft; and
$\alpha$ represents the angle of attack from Figure 2.

Subject to:

$$m_f(k+1) = m_f(k) - \phi\left(P_{gt}(k)\right)\delta \qquad \text{eq. 20}$$

$$E_b(k+1) = E_b(k) - g\left(h\left(P_{em}(k)\right)\right)\delta \qquad \text{eq. 21}$$

$$m_a\Delta v(k) + m_a g\sin\left(\gamma(k)\right) = T(k)\cos\left(\alpha(k)\right) - (1/2)C_D\left(\alpha(k)\right)\rho Sv(k)^2 \qquad \text{eq. 22}$$

$$m_a v(k)\Delta\gamma(k) + m_a g\cos\left(\gamma(k)\right) = T(k)\sin\left(\alpha(k)\right) + (1/2)C_L\left(\alpha(k)\right)\rho Sv(k)^2 \qquad \text{eq. 23}$$

$$m_a v(k) \Delta v(k) + (1/2) C_D\big(\alpha(k)\big)\rho S v(k)^3 + m_a g v(k) \sin\big(\gamma(k)\big) \leq$$

$$\big(P_{gt}(k) + P_{em}(k)\big) n_{prop} \qquad\qquad \text{eq. 24}$$

$$\underline{P_{gt}} \leq P_{gt}(\mathrm{k}) \leq \overline{P_{gt}} \qquad\qquad \text{eq. 25}$$

$$\underline{P_{em}} \leq P_{em}(\mathrm{k}) \leq \overline{P_{em}} \qquad\qquad \text{eq. 26}$$

$$\underline{E_b} \leq E_b(\mathrm{k}) \leq \overline{E_b} \qquad\qquad \text{eq. 27}$$

Equation 19 represents fuel consumption for the remainder of a flight. Equations 20-21 represent fuel mass and battery state-of-charge dynamics. Equations 22-24 represent a power demand constraint for the HEP system 10.

Equations 25-27 represent constraints for gas turbine power, electric motor power, and battery state of charge.

The first elements of the optimization solution $P^0_{gt}(0)$ and $P^0_{em}(0)$ determine the power splitting by the NMPC controller to be implemented at the current time step according to the fuel consumption objective of the mission profile 30. The nonlinear MPC formulation has the potential of providing a higher fuel savings than the linear MPC since it considers accurate flight dynamic models. Additionally, more complex models for the flight equations of motion, fuel consumption, and battery state of charge can be naturally incorporated in a nonlinear MPC formulation, without the need of detailed simplifications of the flight dynamics to convexify the MPC optimization problem.

Utilizing either of the MPC controllers described above (linear or nonlinear) during flight to determine power splitting section require solutions of optimization problems in real time. As a result, these controllers are also should be deployable on computing hardware with enough memory and computing resources to perform the optimization calculations with sufficient efficiency. An alternative to the real time optimization approach is to approximate the solution of the problem offline using a neural network. Then, use the neural network online in real time in place of an optimization solver for the MPC deployment. The advantage of this approach is that a neural network can be executed orders of magnitude faster than an optimization solver (e.g., in the case of a feedforward neural network, since only a feedforward evaluation of the neural network is required in real time). The neural network can also be deployed on memory constrained hardware. This approach can be highly useful to replace the nonlinear program for the NMPC controller since it requires solutions to a challenging optimization problem. Next, the design process of neural networks to replace the MPC online optimization for HEP systems is described.

In the example below, a feedforward neural network is utilized to predict the power draw from the gas turbine and electric motor. However, it is understood that this is a non-limiting example and that other types of neural networks could be used, such as, e.g. a recurrent neural network, or any other type of deep learning model. Parameters are provided that can change during a mission and between subsequent flights as inputs to a neural network. For the example aircraft model depicted in Figures 1-2 and discussed above, the following are provided: the time into the flight, the current measurements of the fuel and battery state of charge, the initial aircraft mass with empty fuel tanks, and the remainder height and velocity values of a mission profile as inputs to the neural network. The neural network may be constructed as follows.

$$\begin{bmatrix} \tilde{P}_{gt} \\ \tilde{P}_{em} \end{bmatrix} = f_N\big(t, m_f, E_b, m_{anf}, \boldsymbol{h}_{t:t\_f}, \boldsymbol{v}_{t:t\_f}; \Theta_{NN}\big) \qquad\qquad \text{eq. 28}$$

where: $t$ represents time;

$m_f$ represents fuel mass;
$E_b$ represents a state of charge of the one or more batteries 13;
$m_{anf}$ represents a mass of the aircraft 24 with an empty fuel tank;
$\boldsymbol{h}_{tt\_f}$ represents the remaining height values of the mission profile;
$\boldsymbol{v}_{tt\_f}$ represents the remaining velocity values of the mission profile;
$t\_f$ is a time that a flight is expected to end; and

$\Theta_{NN}$ denotes the weights and biases in the neural network.

The quantity of the remaining height and velocity values of the mission profile 30 changes at every time step during the flight mission. In the example below, a padding approach is used to concatenate the remaining height and velocity profiles with dummy values (e.g., scalars -1), to make these inputs of the same size. The aircraft mass considering empty fuel tanks is also provided as an input to the neural network since that variable can change between subsequent flights due to changes in the passenger count. In applications, any other variables that are posited to have an effect on the MPC power splitting solution (e.g., wind speed, angular shaft speed, etc.) can also be included as inputs to the neural network.

Training data for the neural network is generated by repeatedly solving the MPC problem for a range of mission profiles 30. A sampling is performed of a plausible set of flight height and velocity values of a plurality of mission profiles and the initial aircraft mass without fuel that the aircraft 24 may encounter during different missions. Then, closed-loop MPC simulations are performed, and the optimal solutions and input parameters to the neural network are gathered as training data. The sampled mission profiles and the closed-loop MPC simulations include representative real time changes during missions, to also expose the neural network to such changes. After the data collection procedure, the following supervised learning is problem to determine the parameters $\Theta_{NN}$ in the neural network.

$$\min_{\Theta_{NN}} \sum_{i=0}^{N_s} \left\| \begin{bmatrix} P^0_{gti} \\ P^0_{emi} \end{bmatrix} - f_N\left(t_i, m_{fi}, E_{bi}, m_{anf}, \boldsymbol{h}_{t:t\_f,\,i}, \boldsymbol{v}_{t:t\_f,\,i}; \Theta_{NN}\right) \right\|^2$$

$$\text{eq. 29}$$

In one example of the supervised learning process, a portion of the potential overall training data is kept as a holdout data set for validation (as described below). The optimization problem loss is also monitored on this holdout data at the end of every epoch. After the training process, the neural network weights that provide, e.g., the best loss on the holdout set for the final validation, are used. This approach ensures that the neural network weights are not overfitted to the training data. All the input and output samples may be scaled using the mean and standard deviation of each variable to facilitate the scaling of the above supervised learning problem. After the training and validation processes, the neural network can be used as a surrogate of the MPC controller for the final deployment.

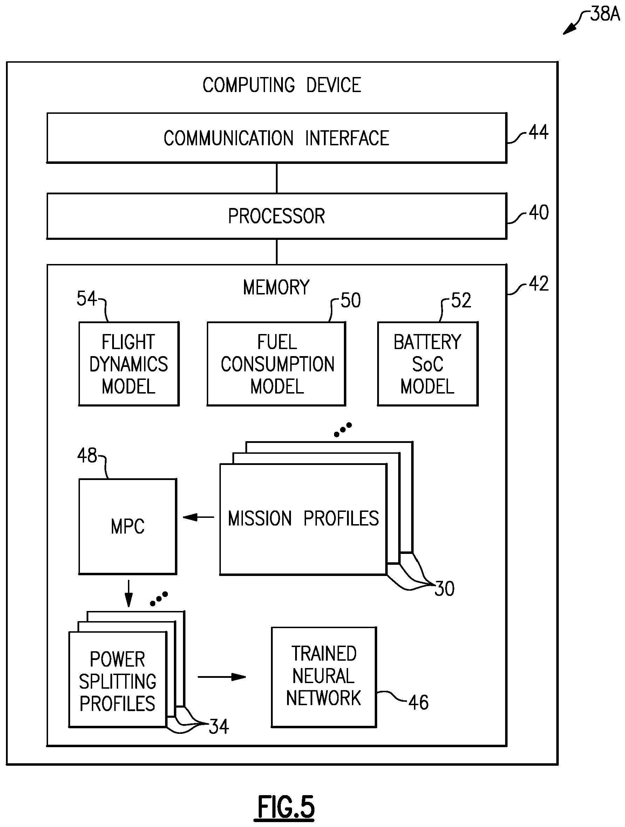

Figure 5 is a schematic view of an example first computing device 38A which may be used to train a neural network 46 as described above. The computing device 38A includes a processor 40 operatively connected to a memory 42 and a communication interface 44. The processor 40 includes processing circuitry such as one or more microprocessors, microcontrollers, application specific integrated circuits (ASICs), or the like. The memory 42 may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 42 may incorporate electronic, magnetic, optical, and/or other types of storage media. The communication interface 44 is operable to communicate with external devices for sending and receiving data.

For the computing device 38A, the memory 42 stores an MPC 48, such as a linear MPC described with equations 11-18 above, or a nonlinear MPC as described with equations 19-27 above. The memory 42 also stores a fuel consumption model 50 representing how fuel is consumed based on a power draw from the gas turbine 11 (e.g., as described in equation 7), a battery state of charge model 52 that models a state of charge of the one or more batteries 13 (e.g., as described in equations 8-10), a flight dynamics model 54 (e.g., as described in equations 1-6), and a plurality of mission profiles 30 describing a plurality of corresponding flights. Each mission profile 30 includes a plurality of height profiles 31 and velocity profiles 32 describing a flight of an aircraft (such as the aircraft 24 of Figures 1-2).

The processor 40 utilizes the MPC 48 to generate a plurality of power splitting profiles 34 corresponding to the plurality of mission profiles 30, and the processor 40 uses the power splitting profiles 34 as training data to train neural network 46 (as described in equations 28-29, for example). The various power splitting profiles 34 for a given mission profile 30 provide a series of optimal power splits to be used throughout a flight described by the mission profile 30, to achieve a fuel consumption objective of the mission profile 30.

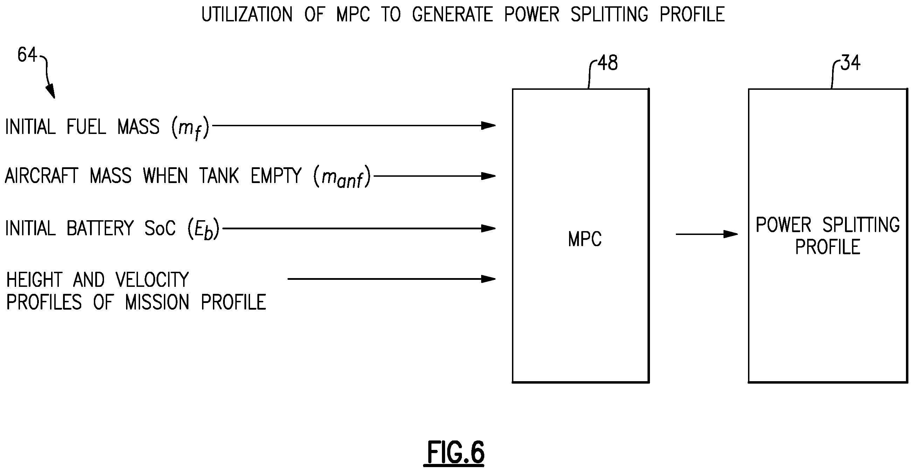

Figure 6 is a schematic view of how computing device 38A may utilize MPC 48 (e.g., in closed loop simulations) to generate a power splitting profile 34 for a mission profile 30. As shown, the MPC 48 receives a plurality of inputs 64 for the mission profile (described above in connection with equation 19), and outputs a power splitting profile 34 corresponding to the mission profile 30, and seeks to achieve a fuel consumption objective of it's the corresponding mission profile 30. This can be repeatedly performed to generate a plurality of power splitting profiles 34. As discussed above, each power splitting profile 34 includes a plurality of power splits between gas turbine power ($P_{gt}$) and electric power ($P_{em}$). The training data that is used to train the neural network 46 may therefore include, for each of the mission profiles 30, the plurality of power splits described in a power splitting profile 34 corresponding to the mission profile 30.

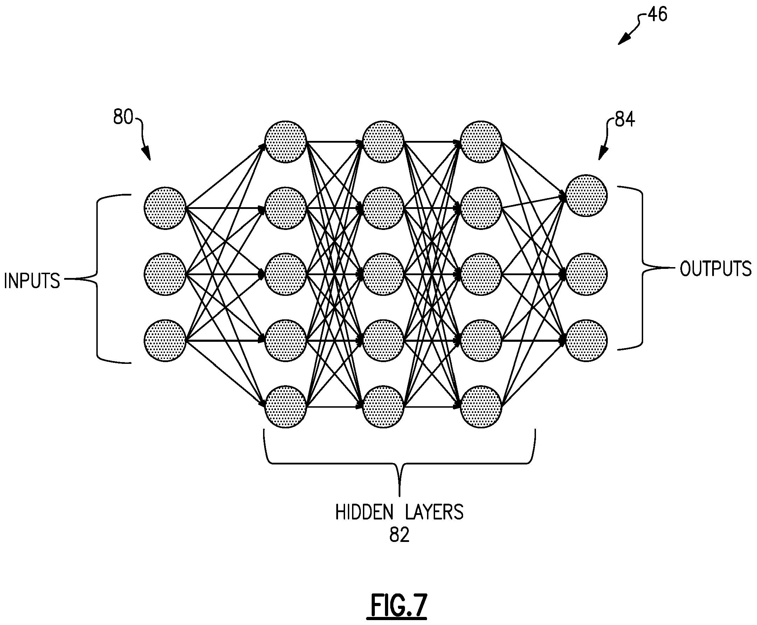

Figure 7 is a schematic view of an example neural network 46. As shown, the neural network includes an input layer 80, an output layer 84, and a plurality of hidden layers 82 therebetween.

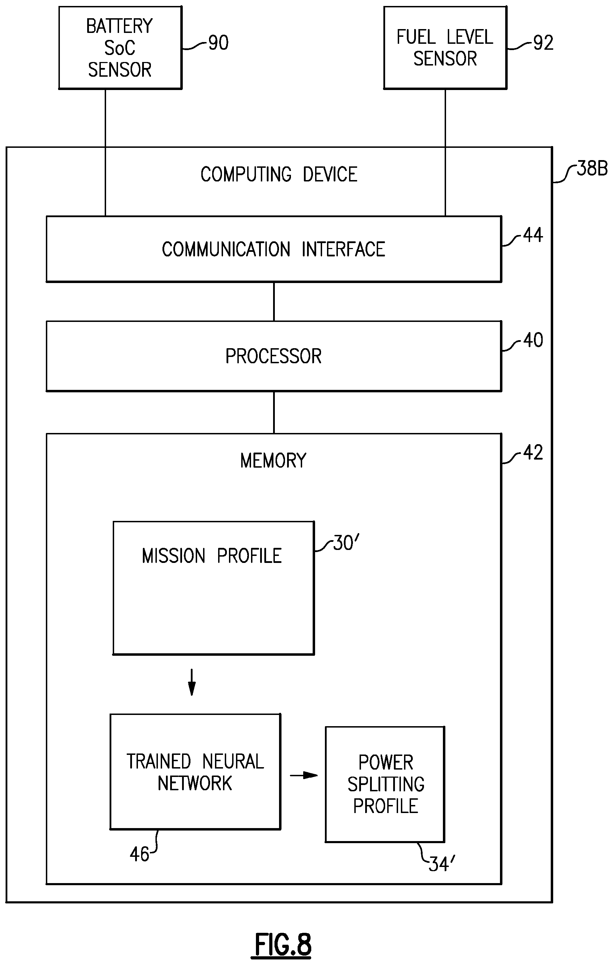

Figure 8 is a schematic view of a second computing device 38B that is configured to utilize the trained neural network 46 during an actual flight, as represented by mission profile 30'. The processor 40 utilizes the trained neural network 46 to obtain a power splitting profile 34' for the mission profile 30'. The computing device 38B may utilize communication interface 44 to obtain a battery state of charge level from a battery state of charge sensor 90 and/or obtain a fuel level from a fuel level sensor 92, for example.

Although depicted as being different than the computing device 38A of Figure 5, it is understood that this is a non-limiting example, and that the computing devices 38A-B may be the same device.

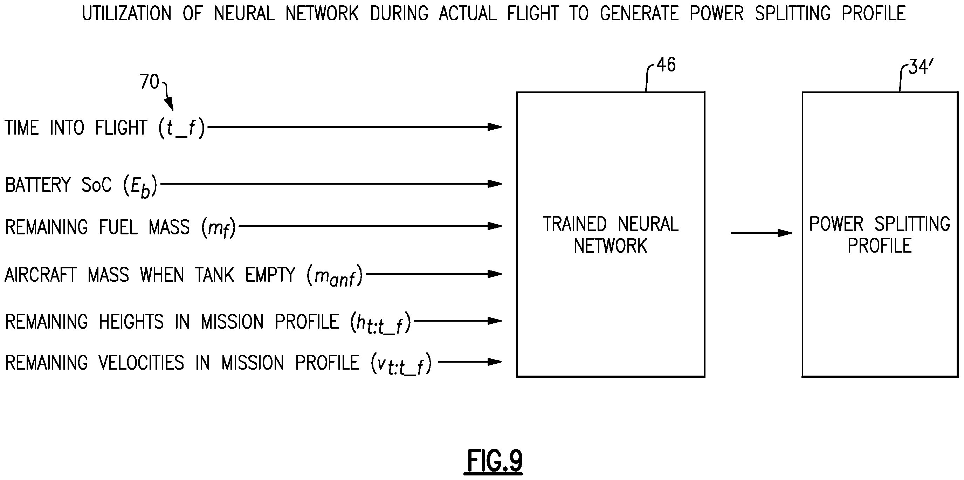

Figure 9 is a schematic view of how the computing device 38B may use the trained neural network 46 to generate the power splitting profile 34' for the mission profile 30'.

As shown, the trained neural network 46 receives a plurality of inputs 70 (described above in connection with equation 28), and outputs a power splitting profile 34' corresponding to the mission profile 30' and seeks to achieve a fuel consumption objective of the mission profile 30'.

The trained neural network 46 is well-suited for use in real-time instead of implementing an MPC 48 (e.g., nonlinear MPC) on an aircraft, as the calculations associated with determining power splitting profiles 34' from the neural network 46 are less complex, and correspondingly require less computing power than utilizing the MPC 48 in real-time. In one example, utilizing the neural network 46 was found to be approximately 1,600 times faster on average than using a nonlinear MPC controller to determine power splitting profiles 34. Due to this computational efficiency, and the potentially small size of the trained neural network 46, the neural network 46 may be suitable for deployment on memory constrained hardware that would otherwise not be well-suited for simply using the MPC in real-time on a flight to generate power splitting profiles. Moreover, in testing, use of the neural network 46 was also found to have a fuel savings equal to that of the power splitting profiles 34 from a nonlinear MPC. Moreover, a mission profile 30 may change in real time (e.g., due to changes in weather, or a request from the air traffic controller), and the neural network 46 is well-suited for adapting to such real time changes, because the training data is generated by the MPC accounting for the possible real time changes in mission profiles.

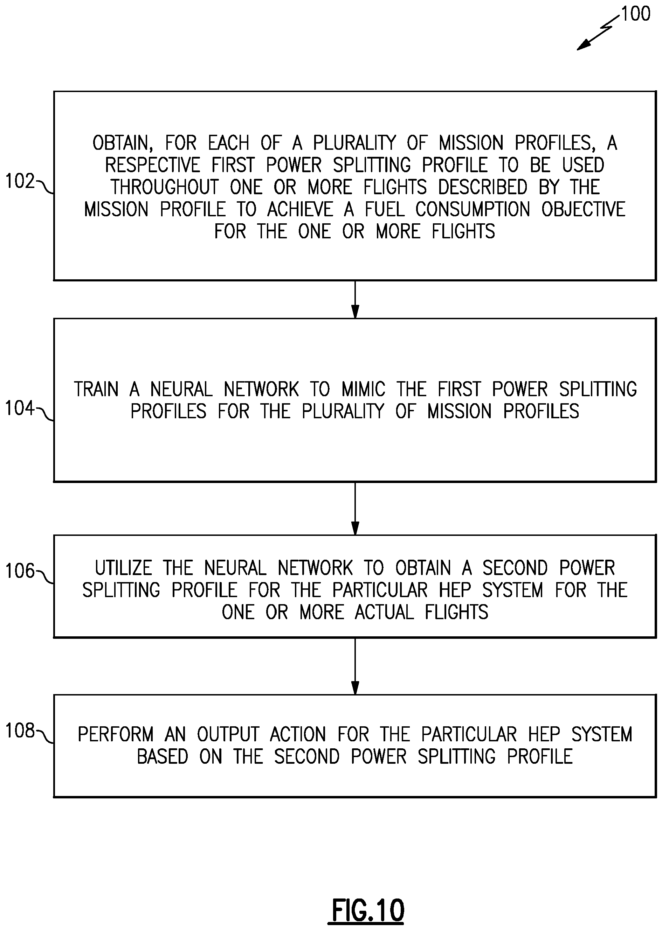

Figure 10 is a flowchart of an example method 100 for a HEP system (e.g., the HEP system 10 of Figure 1). For each of a plurality of mission profiles 30, a respective first power splitting profile 34 are obtained (step 102) which are to be used throughout one or more flights described by the mission profile 30 to achieve a fuel consumption objective for the one or more flights. Each power splitting profile 34 indicates a series of power splits between a gas turbine 11 and an electric motor 12 of HEP system 10. A neural network 46 is trained to mimic the first power splitting profiles 34 for the plurality of mission profiles 30 (step 104).

The method includes, during one or more actual flights corresponding to a particular mission profile 30' of an aircraft 24 that includes the particular HEP system 10, utilizing the neural network 46 to obtain a second power splitting profile 34' for the particular HEP system 10 for the one or more actual flights (step 106), and performing an output action for the particular HEP system 10 based on the second power splitting profile 34' (step 108).

In one example, performing of the output action in step 108 includes controlling the particular HEP system 10 during the one or more actual flights to implement the second power splitting profile 34'.

In the same or another example, performing of the output action in step 108 includes providing a notification of the second power splitting profile 34' (e.g., on a display visible to a pilot of the aircraft 24).

The obtaining of step 102 may include utilizing the MPC 48 to obtain, for each of the plurality of mission profiles 30, the respective first power splitting profile 34. As discussed above, the MPC may be linear or nonlinear.

The method 100 may be performed by one or more computing devices (e.g., steps 102-104 performed by computing device 38A, which may not be on an aircraft, and steps 106-108 performed by computing device 38B on an aircraft).

Validation of the neural network 46 may be performed by utilizing the neural network 46 to obtain one or more additional power splitting profiles 34 for a given mission profile 30, determining (for each of the one or more additional power splitting profiles 34) a difference between first power splitting profile 34 (from MPC 48) for the mission profile 30 and the additional power splitting profile for the mission profile 30 (from the neural network 46), and providing a fault condition notification based the difference exceeding a predefined difference threshold.

The various power splitting profiles 34' provide an optimized way to utilize battery and gas turbine power in the HEP system 10 according to the fuel consumption objective for a particular mission profile 30. By properly accounting for the flight equations of motion, variation in mass, system constraints, and predictions of the flight mission profiles 30, the techniques described above facilitate development of an optimal real-time implementable approach to determine the power split between the gas turbine 11 and the battery-powered electric motor 12.

Although the various equations discussed above provide an example implementation of the method 100 of Figure 10, it is understood that these are non-limiting examples, and that other models and equations could be used.

Although example embodiments have been disclosed, a worker of ordinary skill in this art would recognize that certain modifications would come within the scope of this invention. For that reason, the following claims should be studied to determine the scope and content of this invention.

**Claims**

1. A method (100) for a hybrid electric propulsion (HEP) system (10), the method (100) comprising:

   obtaining (102), for each of a plurality of mission profiles (30), a respective first power splitting profile (34) to be used throughout one or more flights described by the mission profile (30) to achieve a fuel consumption objective for the one or more flights, each power splitting profile (34) indicating a series of power splits between a gas turbine (11) and an electric motor (12) of a HEP system (10);
   training (104) a neural network (46) to mimic the first power splitting profiles (34) for the plurality of mission profiles (30); and
   during one or more actual flights corresponding to a particular mission profile (30') of an aircraft (24) that includes a particular HEP system (10):

   utilizing (106) the neural network (46) to obtain a second power splitting profile (34') for the particular HEP system (10) for the one or more actual flights; and
   performing (108) an output action for the particular HEP system (10) based on the second power splitting profile (34').

2. The method (100) of claim 1, wherein the fuel consumption objective is to minimize fuel consumption during the one or more flights of each mission profile (30).

3. The method (100) of claim 1 or 2, wherein said performing an output action comprises controlling the particular HEP system (10) during the one or more actual flights to implement the second power splitting profile (34') from the neural network (46).

4. The method (100) of any preceding claim, wherein said performing an output action comprises providing a notification of the second power splitting profile (34').

5. The method (100) of any preceding claim, wherein said obtaining comprises utilizing a model predictive control (MPC) (48), to obtain, for each of the plurality of mission profiles (30), the respective first power splitting profile (34) for the mission profile (30), wherein the MPC (48) is based on a fuel consumption model (50) for the HEP system (10) and a battery state of charge model (52) for one or more batteries (13) of the HEP system (10).

6. The method (100) of claim 5, wherein the MPC (48) is a nonlinear MPC.

7. The method (100) of claim 5, wherein the MPC (48) is a linear MPC.

8. The method (100) of any of claims 5 to 7, wherein:

   each mission profile (30) includes a height profile (31) including a plurality of heights, and a velocity profile (32) including a plurality of velocities to be utilized during the one or more flights of the mission profile (30); and
   said utilizing the MPC (48) comprises providing one or more of the following as input to the MPC (48): a fuel mass, a mass of an aircraft (24) that includes the HEP system (10), a state of charge of the one or more batteries (13), and the height profile (31) and velocity profile (32) corresponding to the mission profile (30).

9. The method (100) of any preceding claim, comprising validating the neural network (46), the validating comprising for each of one or more of the mission profiles (30):

   utilizing the neural network (46) to obtain an additional power splitting profile (34') for the mission profile (30);
   determining a difference between the first power splitting profile (34) for the mission profile (30) and the additional power splitting profile (34') for the mission profile (30); and
   providing a fault condition notification based on the difference exceeding a predefined difference threshold.

**10.** A system for a hybrid electric propulsion, HEP, system (10), the system comprising processing circuitry operatively connected to memory (42), and configured to carry out the method (100) of any preceding claim.

**11.** A method for a hybrid electric propulsion, HEP, system (10), comprising:

obtaining a neural network (46) that has been trained to mimic a plurality of power splitting profiles (34) for a plurality of mission profiles (30) for a HEP system (10), wherein each power splitting profile (34) indicates a series of power splits between a gas turbine (11) and an electric motor (12) of the HEP system (10), and wherein each mission profile (30) includes a corresponding power splitting profile (34) to achieve a fuel consumption objective for one or more flights of the mission profile (30);

during one or more actual flights corresponding to a particular mission profile (30') of an aircraft (24) that includes a particular HEP system (10), utilizing the neural network (46) to obtain an additional power splitting profile (34') for the particular HEP system (10) for the actual flight; and

controlling the particular HEP system (10) during the one or more actual flights to implement the additional power splitting profile (34').

**12.** The method of claim 11, wherein the fuel consumption objective is to minimize fuel consumption during the one or more flights of each mission profile (30).

10

11

BATTERY 13

$P_b$

FUEL 23

ELECTRIC BUS 14

$\varphi$

22

21

LPT 19

HPT

COMBUSTOR

16

HPC 20

LPC 18

15

$P_c$

MOTOR 12

$P_{gt}$

$P_{em}$

$P_{drv}$

FAN 17

**FIG.1**

## FIG.2

MISSION PROFILE

FIG.3

POWER SPLITTING PROFILE

GAS TURBINE POWER
PROFILE

$P_{gt}(0)$
$P_{gt}(1)$
$P_{gt}(2)$
$P_{gt}(3)$
$\cdot$
$\cdot$
$\cdot$
$P_{gt}(t\_f)$

ELECTRIC POWER
PROFILE

$P_{em}(0)$
$P_{em}(1)$
$P_{em}(2)$
$P_{em}(3)$
$\cdot$
$\cdot$
$\cdot$
$P_{em}(t\_f)$

**FIG.4**

EP 4 477 864 A2

38A

COMPUTING DEVICE

COMMUNICATION INTERFACE — 44

PROCESSOR — 40

MEMORY — 42

54                        50              52

FLIGHT DYNAMICS MODEL

FUEL CONSUMPTION MODEL

BATTERY SoC MODEL

48

MPC ← MISSION PROFILES

30

POWER SPLITTING PROFILES → TRAINED NEURAL NETWORK — 46

34

**FIG.5**

UTILIZATION OF MPC TO GENERATE POWER SPLITTING PROFILE

64

INITIAL FUEL MASS $(m_f)$ $\longrightarrow$

AIRCRAFT MASS WHEN TANK EMPTY $(m_{anf})$ $\longrightarrow$

INITIAL BATTERY SoC $(E_b)$ $\longrightarrow$

HEIGHT AND VELOCITY
PROFILES OF MISSION PROFILE $\longrightarrow$

48

MPC

34

POWER SPLITTING
PROFILE

<u>FIG.6</u>

EP 4 477 864 A2

INPUTS

OUTPUTS

HIDDEN LAYERS
82

FIG.7

FIG.8

UTILIZATION OF NEURAL NETWORK DURING ACTUAL FLIGHT TO GENERATE POWER SPLITTING PROFILE

TIME INTO FLIGHT $(t\_f)$

BATTERY SoC $(E_b)$

REMAINING FUEL MASS $(m_f)$

AIRCRAFT MASS WHEN TANK EMPTY $(m_{anf})$

REMAINING HEIGHTS IN MISSION PROFILE $(h_{t:t\_f})$

REMAINING VELOCITIES IN MISSION PROFILE $(v_{t:t\_f})$

TRAINED NEURAL NETWORK

POWER SPLITTING PROFILE

FIG.9

EP 4 477 864 A2

100

OBTAIN, FOR EACH OF A PLURALITY OF MISSION PROFILES, A RESPECTIVE FIRST POWER SPLITTING PROFILE TO BE USED THROUGHOUT ONE OR MORE FLIGHTS DESCRIBED BY THE MISSION PROFILE TO ACHIEVE A FUEL CONSUMPTION OBJECTIVE FOR THE ONE OR MORE FLIGHTS

102

TRAIN A NEURAL NETWORK TO MIMIC THE FIRST POWER SPLITTING PROFILES FOR THE PLURALITY OF MISSION PROFILES

104

UTILIZE THE NEURAL NETWORK TO OBTAIN A SECOND POWER SPLITTING PROFILE FOR THE PARTICULAR HEP SYSTEM FOR THE ONE OR MORE ACTUAL FLIGHTS

106

PERFORM AN OUTPUT ACTION FOR THE PARTICULAR HEP SYSTEM BASED ON THE SECOND POWER SPLITTING PROFILE

108

## FIG.10